# EUROPEAN PATENT SPECIFICATION

(11) **EP 2 525 613 B1**
(45) Date of publication and mention of the grant of the patent: **14.11.2018**
(21) Application number: 11166747.3
(22) Date of filing: 19.05.2011
(51) Int. Cl.: H04L 12/58, H04W 4/029, H04W 4/21

(54) **Presenting instant messaging contacts listed by proximity to set location**
Darstellung von Instant-Messaging-Kontakten, die nach Nähe des Einstellungsorts aufgelistet sind
Présentation des contacts de messagerie instantanée répertoriés par proximité d'emplacement définie

(43) Date of publication of application: 21.11.2012
(73) Proprietor: BlackBerry Limited, Waterloo, ON N2K 0A7 (CA)
(72) Inventor: Khan, Tabarak, Rolling Meadows, IL 60008 (US)
(74) Representative: Roberts, Gwilym Vaughan

(56) References cited:
- WO-A1-2004/059996
- WO-A2-01/63315
- US-A1- 2004 203 923
- US-A1- 2004 260 762
- US-A1- 2008 096 519
- US-A1- 2010 004 005

## Description

### FIELD OF THE TECHNOLOGY

The present disclosure relates generally electronic devices having instant messaging (IM) capabilities. More specifically, enabling implementations relate to sorting IM contacts based on geographic location. The technology provides means and methods whereby an electronic device is enabled to evaluate and present information regarding available IM contacts based on geographic criteria. In at least one implementation, the technology provides for receiving location information from devices which are associated with instant messaging contacts of a first electronic device. The technology can be customized dynamically on a per device basis. In at least one implementation the technology presents proximity information regarding at least one electronic device and at least one set location. In at least one implementation the technology presents proximity information regarding at least one electronic device and at least one set location where the set location is the location of a second electronic device.

International application publication number WO 01/63315 discloses a position locating system including one or more target monitoring devices that are configured to monitor and display the position of one or more selected target devices.

International application publication number WO 2004/059996 discloses methods of providing services in dependence on the geographical location of mobile terminals in a cellular network.

US patent application publication number US 2010/0004005 discloses a mobile computing device comprising a user input device, an output device, a memory configured to store data and a processing circuit. The processing circuit is to configured to receive user input from the user input device indicative of a request to associate the stored data with a second mobile computing device, to receive an indication that the second mobile computing device is proximate to the mobile computing device, and to provide a notification to the user via the output device based on the indication.

An invention is set out in the appended claims.

### BRIEF DESCRIPTION OF THE DRAWINGS

FIG. 1 illustrates a system including an electronic device to which example implementations of the technology can be applied.
FIG. 2 illustrates a block diagram of an electronic device.
FIG. 3 illustrates an instant messaging window presented on a display of an electronic device.
FIG. 4 illustrates a location entry instant messaging window presented on a display of an electronic device.
FIG. 5 illustrates an instant messaging window listing contacts ranked by order of distance to a single set location.
FIG. 6 illustrates an instant messaging window listing contacts ranked by order of travel time to a single set location
FIG. 7 illustrates an instant messaging window listing contacts by ranked by order of distance to a categorized location.
FIG. 8 illustrates an instant messaging window listing contacts by ranked by order of travel time to a categorized location.
FIG. 9 illustrates an instant messaging window listing contacts ranked by order of distance to a single set location which is the location of an electronic device.
FIG. 10 illustrates an example method implementing the technology.

### DETAILED DESCRIPTION

Within the technology, instant messaging (IM) is a collection of technologies used for real-time communication between two or more participants over the Internet, or other types of networks. Instant messaging (IM) is a form of real-time direct communication between two or more people using personal computers or other devices, along with shared software clients. The user's text is conveyed over a network, such as the Internet.

In some contexts or implementations, IM may be considered under the umbrella term online chat, as it includes the capability to provide a real-time text-based networked communication system based on device client applications and network services that facilitate communication connections between specified known users. Known users, or simply contacts or one or more entries from a contact list, comprise, for example, a Buddy List, a Friend List and a Contact List. IM can comprise web-based applications that allow communication between users in a multi-user environment.

In at least one implementation, the technology can sort contacts within a list by geographic criteria including contacts not available for instant messaging and provide other options for contacting contacts, such as via telephone or email.

In at least one implementation of the technology, one or more web browsers can serve as intermediaries between IM contacts to enable IM correspondence.

Location of one or more IM contacts can be determined by use of one or more Global Positioning Systems (GPS), if a contact is configured to have a GPS receiver. Global Positioning Systems are space-based global navigation satellite systems (GNSS) that provide location and time information in all weather and at all times anywhere on or near Earth when and where there is an unobstructed line of sight to multiple GPS satellites.

In some implementations, location of a contact can be determined based upon the contact's internet protocol address (IP address). An IP address is a numerical label assigned to each device participating in a network that uses the Internet Protocol for communication. An IP address serves multiple functions, including such functions as host or network interface identification and location addressing. The IP addresses may be either public or private. That is, they can reside within a public network, such as the internet, or within private networks.

Reference will now be made in detail to implementations of the technology. Each example is provided by way of explanation of the technology only, not as a limitation of the technology. It will be apparent to those skilled in the art that various modifications and variations can be made in the present technology. For instance, features described as part of one implementation of the technology can be used on another implementation to yield a still further implementation. Thus, it is intended that the present technology cover such modifications and variations that come within the scope of the technology.

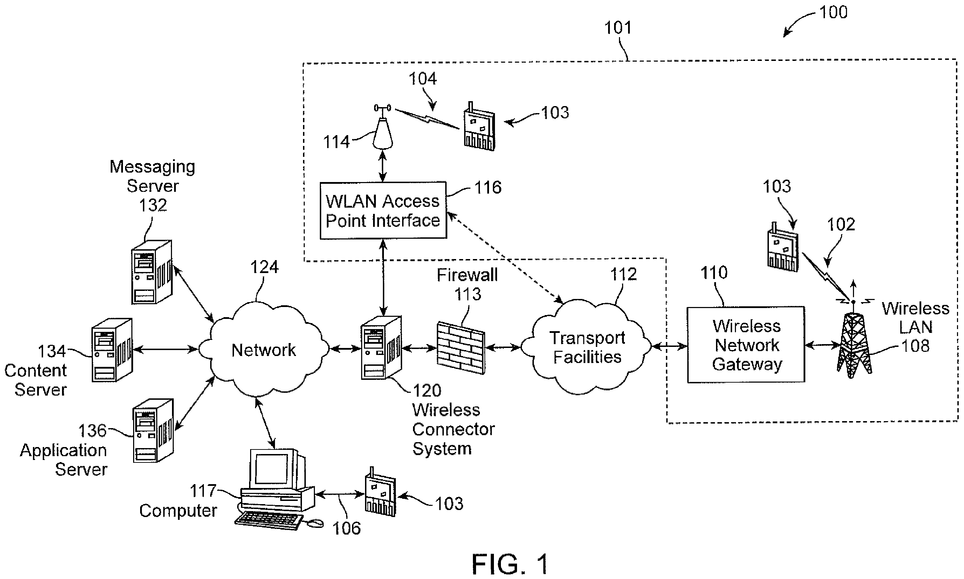

In order to facilitate an understanding of environments in which example implementations described herein can operate, reference is made to FIG. 1, which shows, in block diagram form, a communication system **100** in which implementations of the technology can be applied. The communication system **100** may comprise a number of electronic devices **103** and computers **117** and other devices that may be connected to the remainder of system **100** in any of several different ways. Accordingly, several instances of electronic devices **103** are depicted in FIG. 1 employing different example ways of connecting to system **100.** Electronic devices include, but are not limited to, communication devices, computers, laptop computers, personal computers, handheld electronic devices, portable communications devices, mobile communications devices and the like.

These figures are exemplary only, and modifications may be necessary to make the electronic device, e.g., **103**, **117** operable in particular network environments. While in the illustrated implementations, the communication devices, e.g., **103** may comprise smart phones, in other implementations, the communication devices may comprise personal digital assistants (PDA), tablet computers, laptop computers, desktop computers, servers, or other communication devices capable of sending and receiving electronic messages. Electronic message includes, but is not limited to, instant messages and email messages.

Electronic devices **103** are connected to a wireless network **101** that may comprise one or more of a Wireless Wide Area Network (WWAN) **102** and a Wireless Local Area Network (WLAN) **104** or other suitable network arrangements. In some implementations, the electronic devices **103** are configured to communicate over both the WWAN **102** and WLAN **104,** and to roam between these networks. In some implementations, the wireless network **101** may comprise multiple WWANs **102** and WLANs **104.** In some implementations, the electronic devices **103** are configured to communicate over the internet.

The WWAN **102** may be implemented as any suitable wireless access network technology. By way of example, but not limitation, the WWAN **102** may be implemented as a wireless network that includes a number of transceiver base stations **108** where each of the base stations **108** provides wireless Radio Frequency (RF) coverage to a corresponding area or cell. The WWAN **102** is typically operated by a mobile network service provider that provides subscription packages to users of the electronic devices **103.** In some implementations, the WWAN **102** conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (High-Speed Downlink Packet Access), IEEE 802.16e (also referred to as Worldwide Interoperability for Microwave Access or "WiMAX"), or various other networks. Although WWAN **102** is described as a "Wide-Area" network, that term is intended herein also to incorporate wireless Metropolitan Area Networks (WMAN) and other similar technologies for providing coordinated service wirelessly over an area larger than that covered by typical WLANs.

The WWAN **102** may further comprise a wireless network gateway **110** that connects the electronic devices **103** to transport facilities **112**, and through the transport facilities **112** to a wireless connector system **120.** Transport facilities may include one or more private networks or lines, the Internet, a virtual private network, or any other suitable network. The wireless connector system **120** may be operated, for example, by an organization or enterprise such as a corporation, university, or governmental department, which allows access to a network **124** such as an internal or enterprise network (e.g., an intranet), and its resources, or the wireless connector system **120** may be operated by a mobile network provider. In some implementations, the network **124** may be realized using the Internet rather than, or in addition to, an internal or enterprise network.

The wireless network gateway **110** provides an interface between the wireless connector system **120** and the WWAN **102**, which facilitates communication between the electronic devices **103** and other devices (not shown) connected, directly or indirectly, to the WWAN **102.** Accordingly, communications sent via the electronic devices **103** are transported via the WWAN **102** and the wireless network gateway **110** through transport facilities **112** to the wireless connector system **120.** Communications sent from the wireless connector system **120** are received by the wireless network gateway **110** and transported via the WWAN **102** to the electronic devices **103.**

The WLAN **104** comprises a wireless network that, in some implementations, conforms to IEEE 802.11x standards (sometimes referred to as Wi-Fi TM) such as, for example, the IEEE 802.11a, 802.11b and/or 802,11g standard. Other communication protocols may be used for the WLAN **104** in other implementations such as, for example, IEEE 802.11n, IEEE 802.16e (also referred to as Worldwide Interoperability for Microwave Access or "WiMAX"), or IEEE 802.20 (also referred to as Mobile Wireless Broadband Access), The WLAN **104** includes one or more wireless RF Access Points (AP) **114** (one of which is shown in FIG. 1) that collectively provide a WLAN coverage area.

The WLAN **104** may be a persona! network of the user, an enterprise network, or a hotspot offered by an internet service provider (ISP), a mobile network provider, or a property owner in a public or semi-public area, for example. The access points **114** are connected to an access point (AP) interface **116** that may connect to the wireless connector system **120** directly, (for example, if the access point **114** is part of an enterprise WLAN **104** in which the wireless connector system **120** resides), or indirectly, as indicated by the dashed line in FIG. 1, via the transport facilities **112** if the access point **114** is a personal Wi-Fi network or Wi-Fi hotspot (in which case a mechanism for securely connecting to the wireless connector system **120**, such as a virtual private network (VPN), may be used). The AP interface **116** provides translation and routing services between the access points **114** and the wireless connector system **120** to facilitate communication, directly or indirectly, with the wireless connector system **120.**

The wireless connector system **120** may be implemented as one or more servers, and is typically located behind a firewall **113.** The wireless connector system **120** manages communications, including email, Hypertext Transfer Protocol (HTTP), and HTTP Secure (HTTPS) communications to and from a set of managed electronic devices **103.** The wireless connector system **120** also provides administrative control and management capabilities over users and electronic devices **103** that might connect to the wireless connector system **120.**

The wireless connector system **120** allows the electronic devices **103** to access the network **124** and connected resources and services such as a messaging server **132** (for example, a Microsoft Exchange Server®, IBM Lotus Domino®, or Novell GroupWise™ email server), a content server **134** for providing content such as Internet content or content from an organization's internal servers, application servers **136** for implementing server-based applications such as instant messaging (IM) applications to electronic devices **103**, and intranet file services.

The wireless connector system **120** typically provides a secure exchange of data (e.g., email messages, personal information manager (PIM) data, and IM data) with the electronic devices **103.** In some implementations, communications between the wireless connector system **120** and the electronic devices **103** are encrypted. In some implementations, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data. In some implementations, the private encryption key is stored only in the user's mailbox on the messaging server **132** and on the electronic device **103**, and can typically be regenerated by the user on electronic devices **103.** Data sent to the electronic devices **103** is encrypted by the wireless connector system **120** using the private encryption key retrieved from the user's mailbox. The encrypted data, when received on the electronic devices **103**, is decrypted using the private encryption key stored in memory. Similarly, data sent to the wireless connector system **120** from the electronic devices **103** is encrypted using the private encryption key stored in the memory of the electronic device **103.** The encrypted data, when received on the wireless connector system **120**, is decrypted using the private encryption key retrieved from the user's mailbox.

The wireless network gateway **110** is adapted to send data packets received from the electronic device **103** over the WWAN **102** to the wireless connector system **120.** The wireless connector system **120** then sends the data packets to the appropriate connection point such as the messaging server **132** or content servers **134** or application server **136.** Conversely, the wireless connector system **120** sends data packets received, for example, from the messaging server **132** or content servers **134** or application servers **136** to the wireless network gateway **110** that then transmit the data packets to the destination electronic device **103.** The AP interfaces **116** of the WLAN **104** provide similar sending functions between the electronic device **103**, the wireless connector system **120** and network connection point such as the messaging server **132**, content server **134** and application server **136.**

The network **124** may comprise a private local area network, metropolitan area network, wide area network, the public Internet or combinations thereof and may include virtual networks constructed using any of these, alone, or in combination. An electronic device **103** may alternatively connect to the wireless connector system **120** using a computer **117**, such as desktop or notebook computer, via the network **124.** A link **106** may be provided for exchanging information between the electronic device **103** and a computer **117** connected to the wireless connector system **120.** The link **106** may comprise one or both of a physical interface and short-range wireless communication interface. The physical interface may comprise one or combinations of an Ethernet connection, Universal Serial Bus (USB) connection, Firewire™ (also known as an IEEE 1394 interface) connection, or other serial data connection, via respective ports or interfaces of the electronic device **103** and computer **117.** The short-range wireless communication interface may be a personal area network (PAN) interface. A Personal Area Network is a wireless point-to-point connection meaning no physical cables are used to connect the two end points. The short-range wireless communication interface may comprise one or a combination of an infrared (IR) connection such as an Infrared Data Association (IrDA) connection, a short-range radio frequency (RF) connection such as one specified by IEEE 802.15.1 or the BLUETOOTH special interest group, or IEEE 802.15.3a, also referred to as UltraWideband (UWB), or other PAN connection.

It will be appreciated that the above-described communication system **100** is provided for the purpose of illustration only, and that the above-described communication system comprises one possible communication network configuration of a multitude of possible configurations for use with the electronic devices **103.** Suitable variations of the communication system will be understood to a person of skill in the art and are intended to fall within the scope of the present disclosure.

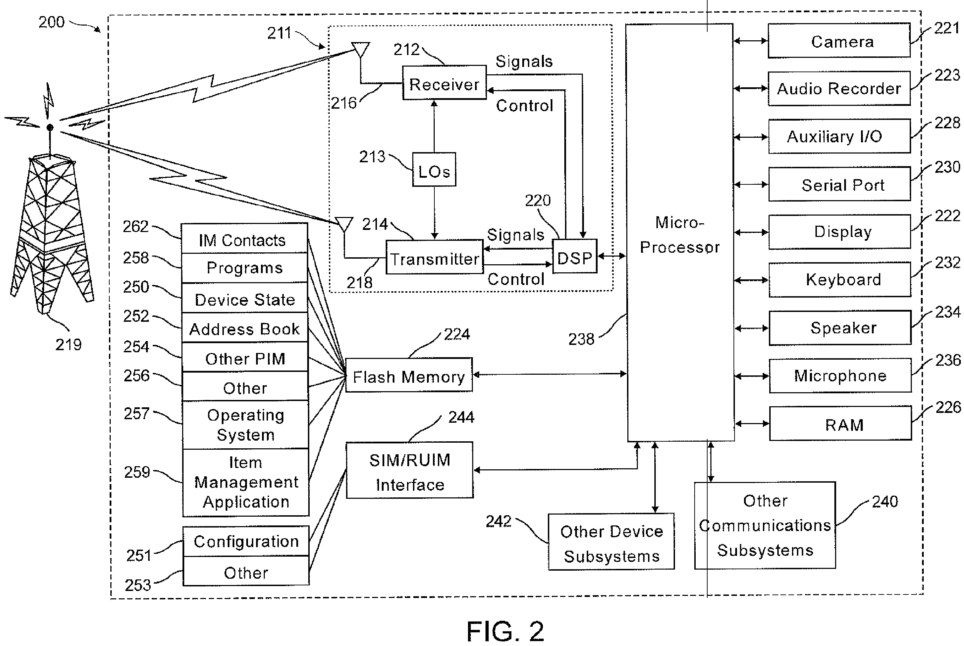

Within this disclosure the singular and plural of electronic device(s) will each be understood to include the other. Referring to FIG. 2, a block diagram of an electronic device, such as **200** and **103** and **117**, in accordance with an exemplary implementation is illustrated. As shown, the device **200** includes a processor **238** that controls the operation of the communication device **200.** A communication subsystem **211** performs communication transmission and reception with the wireless network **219**, The microprocessor **238** further can be communicatively coupled with an auxiliary input/output (I/O) subsystem **228.** In at least one implementation, the processor **238** can be communicatively coupled to a serial port (for example, a Universal Serial Bus port) **230** that can allow for communication with other devices or systems via the serial port **230.** A display **222** can be communicatively coupled to processor **238** to allow for display of information to an operator of the communication device **200.** When the communication device **200** is equipped with a keyboard **232**, the keyboard can also be communicatively coupled with the processor **238.** The communication device **200** can include a speaker **234**, a microphone **236**, random access memory (RAM) **226**, and flash memory **224**, all of which may be communicatively coupled to the processor **238.** Other similar components may be provided on the communication device **200** as well and optionally communicatively coupled to the processor **238.** Other communication subsystems **240** and other device subsystems **242** are generally indicated as being functionally connected with the processor **238** as well. An example of a communication subsystem **240** is a short range communication system such as BLUETOOTH® communication module or a WI-FI® communication module (a communication module in compliance with IEEE 802.11b) and associated circuits and components. Examples of other device subsystem **242** include sensor **200** of FIG. 2 and implementations of the present technology.

Additionally, the processor **238** is able to perform operating system functions and enables execution of programs on the communication device **200.** In some implementations not all of the above components are included in the communication device **200.**

The device **200** may be configured to send and receive messages. The device **200** includes a body that can, in some implementations, be configured to be held in one hand by an operator of the device **200** during text entry. A display 222 is included that is located on an electronic and upon which information is displayed to the operator, e.g., during text entry. The device **200** may also be configured to send and receive voice communications such as mobile telephone calls. The device **200** also can include a camera **221** to allow the device 300 to take electronic photographs that can be referred to as photos or pictures. Further, the device 300 can be configured to operate a web browser.

The auxiliary I/O subsystem **228** can take the form of a variety of different navigation tools (multi-directional or single-directional) such as a trackball navigation tool, or a thumbwheel, a navigation pad, a joystick, touch-sensitive interface, or other I/O interface. These navigation tools may be located on the front surface of the communication device **200** or may be located on any exterior surface of the communication device **200.** Other auxiliary I/O subsystems may include external display devices and externally connected keyboards (not shown). While the above examples have been provided in relation to the auxiliary I/O subsystem **228**, other subsystems capable of providing input or receiving output from the communication device **200** are considered within the scope of the technology.

Furthermore, the electronic device **200** is equipped with components to enable operation of various programs, as shown in FIG. 2. In an exemplary implementation, the flash memory **224** is enabled to provide a storage location for the operating system **257**, device programs **258**, and data. The operating system **257** is generally configured to manage other programs **258** that are also stored in memory **224** and executable on the processor **238**, The operating system **257** honors requests for services made by programs **258** through predefined program interfaces. More specifically, the operating system **257** typically determines the order in which multiple programs **258** are executed on the processor **238** and the execution time allotted for each program **258**, manages the sharing of memory **224** among multiple programs **258**, handles input and output to and from other device subsystems **242**, and so on. In addition, operators typically can interact directly with the operating system **257** through a user interface usually including the keyboard **232** and display **222.** While in an exemplary implementation the operating system **257** is stored in flash memory **224**, the operating system **257** in other implementations is stored in read-only memory (ROM) or similar storage element (not shown). The operating system **257**, device programs **258**, or parts thereof, may be loaded in RAM **226** or other volatile memory.

In some implementations, the flash memory **224** may contain programs **258** for execution on the device **200**, including - but not limited to - an address book **252**, a personal information manager (PIM) **254**, a device state **250**, and an instant messaging contact list **262.** Furthermore, programs **258**, such as social software, and other information **256** including data can be segregated upon storage in the flash memory **224** of the device **200.**

When the communication device **200** is enabled for two-way communication within the wireless communication network **219**, it can send and receive signals from a communication system or service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-T9), Ultra Mobile Broadband (UMB) networks, Worldwide Interoperability for Microwave Access (WiMAX), and other networks that can be used for data and voice, or just data or voice. For the systems listed above, the electronic device **200** may use a unique identifier to enable the communication device **200** to transmit and receive signals from the communication network **219.** Other systems may not use such identifying information. GPRS, UMTS, and EDGE use a Subscriber Identity Module (SIM) in order to allow communication with the communication network **219.** Likewise, most CDMA systems use a Removable User Identity Module (RUIM) in order to communicate with the CDMA network. The RUIM and SIM card can be used in multiple different communication devices **200.** The communication device **200** can be configured to operate some features without a SIM/RUIM card, but it will not necessarily be able to communicate with the network **219.** A SIM/RUIM interface **244** located within the communication device **200** allows for removal or insertion of a SIM/RUIM card (not shown). The SIM/RUIM card features memory and holds key configurations **251**, and other information **253** such as identification and subscriber related information. With a properly enabled communication device **200**, two-way communication between the communication device **200** and communication network **219** is possible.

The electronic device can communicate with a Global Positioning System via one or more networks **219.**

If the communication device **200** is enabled as described above or the communication network **219** does not use such enablement, the two-way communication enabled communication device **200** is able to both transmit and receive information from the communication network **219.** The transfer of communication can be from the communication device **200** or to the communication device **200.** In order to communicate with the communication network **219**, the device **200** can be equipped with an integral or internal antenna **218** for transmitting signals to the communication network **219.** Likewise the device **200** can be equipped with another antenna **216** for receiving communication from the communication network **219.** These antennae (**216**, **218**) in another exemplary implementation are combined into a single antenna (not shown). As one skilled in the art would appreciate, the antenna or antennae (**216**, **218**) in another implementation can be externally mounted on the communication device **200.**

When equipped for two-way communication, the communication device **200** features a communication subsystem **211.** This communication subsystem **211** can be configured to support the operational needs of the communication device **200.** The subsystem **211** includes a transmitter **214** and receiver **212** including the associated antenna or antennae (**216**, **218**) as described above, local oscillators (LOs) **213**, and a processing module that in the presently described exemplary implementation is a digital signal processor (DSP) **220.**

Communication by the communication device **200** with the wireless network **219** can be any type of communication that both the wireless network **219** and communication device **200** are enabled to transmit, receive and process. In general, these can be classified as voice or data, or both voice and data. Voice communication generally refers to communication in which signals for audible sounds are transmitted by the communication device **200** through the communication network **219.** Data generally refers to all other types of communication that the communication device **200** is capable of performing within the constraints of the wireless network **219.** Data communication includes, but is not limited to instant messaging and email.

Example device programs that can depend on such data include email, contacts and calendars. For each such program, synchronization with home-based versions of the program can be desirable for either or both of their long term and short term utility. As an example, emails are often time-sensitive, so substantially real time (or near-real time) synchronization may be desired. Contacts, on the other hand, can be usually updated less frequently without inconvenience. Therefore, the utility of the communication device **200** is enhanced when connectable within a communication system, and when connectable on a wireless basis in a network **219** in which voice, text messaging, instant messaging, and other data transfer are accommodated. Device **200** can include programs such as a web browser, a file browser, and client programs for interacting with server programs. Devices, e.g., **103**, **117**, **200**, for use in the technology can be characterized by an identification number assigned to the device. In some implementations, identification numbers cannot be changed and are locked to each device. In some implementations, identification numbers can be associated with the IP address of a device.

Implementations of the technology can be realized as including programming on an electronic device, e.g., **103.** In some implementations, programming for the technology is on the electronic device **103**, while data used by the electronic device **103** is on the wireless connector system **120** or a network server such as content server **134**, messaging server **132**, or application server **136**, or the Internet. In some implementations, programming for the technology can be realized on a remote server. Allocation of functionality among architectural elements can be a function of several factors including latency, processing resource availability and efficient usage, storage availability and efficient usage, and revenue opportunities.

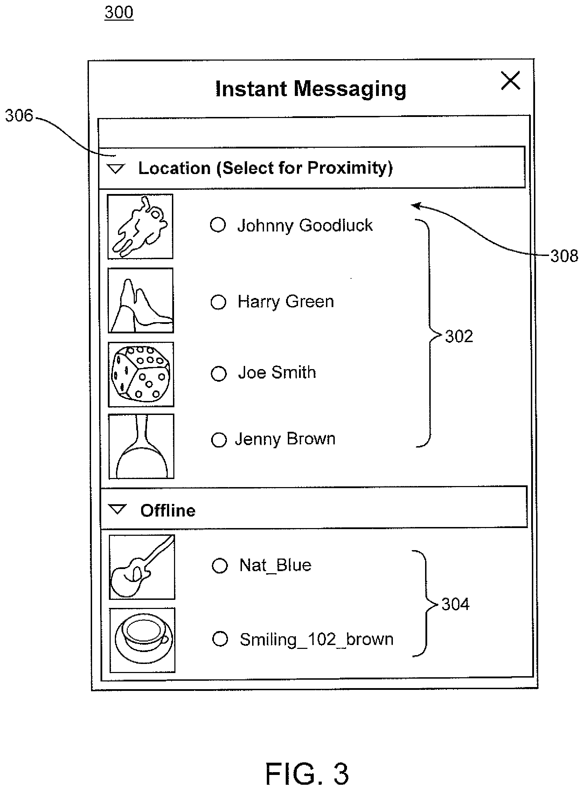

FIG. 3 illustrates an instant messaging window **300** as can be presented on a display **222** of an electronic device **200.** The instant messaging window **300** lists **308** available instant messaging contacts **302** from the instant messaging contacts corresponding to the device, e.g. **262.** The window **300** also displays offline or unavailable instant messaging contacts **304.** The window further displays an icon or letter box **306** prompting the entry or selection of a location.

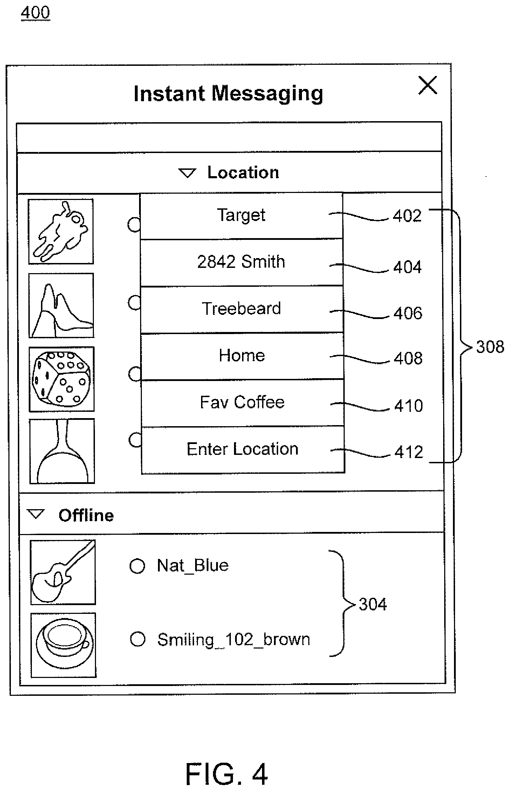

FIG. 4 illustrates a location selection window **400** as can be presented by a display **222.** Possible locations **402-410** are listed **308** as selectable items. The first location listed, **402**, represents multiple locations. Each of the multiple locations fall within a category. In the example illustrated in FIG. 4, the multiple locations represented by **402** are the addresses of all businesses which bear the name shown in **402.** Locations **404-410** each correspond to a single address location. Some of the locations, e.g. **410**, can be configured according to a user entry. So, for example, an address corresponding to a device **200** owner's favorite coffee seller **410** can have been previously entered into memory, e.g. **224**, **226.** The window **400** illustrated in FIG. 4, also includes a tab or letter box or icon **412** to enable the user of a device to enter a location. The location to be entered can be manually entered via a keyboard **232** or can be accessed from memory, e.g. **224**, **226**, or from external data sources to which a device **200** is connected via one or more networks, e.g., **124**, **219.** The location to be entered **412** can be the location corresponding to the location of an electronic device, whether it is the location of the device **200** itself or of other contacts, e.g., **302.**

The technology requests location or address information from the devices **200,** (e.g. **103**, **117**) associated with the available instant messaging contacts. The technology sorts the available or online instant message contacts by order of their proximity to the set location. In the case of multiple set locations, as where a user has requested multiple address locations corresponding to a particular business name, or address locations of businesses of a particular type, or address locations of businesses that sell a particular product or brand, the technology determines the pair-wise proximity between the set locations and the instant messaging contact locations. That is, the technology determines the distances between each of the locations and each of the available contacts. For a discussion of pair-wise comparison and testing, see Tai and Lee, A Test Generation Strategy of Pairwise Testing, IEEE Transactions on Software Engineering, Vol. 28, No. 1, January 2002, which is fully incorporated by reference herein. See also, Saaty, Relative Measurement and Its Generalization in Decision Making etc., RACSAM, Vol. 202(2), pp. 251-318, 2008, which is fully incorporated by reference herein. The technology presents a list **308** of instant messaging contacts in order of their (pairwise) proximity to the multiple locations. For example, a user may wish to know which of his online messaging contacts is closest to a store which sells a particular product. The technology requests the locations of stores which sell the product and displays a list **308** of instant messaging contacts in the order of the contacts' closeness or proximity to any such store. The technology can be configured to display the distance from the contacts to the displayed store location, as well as display the address of the store

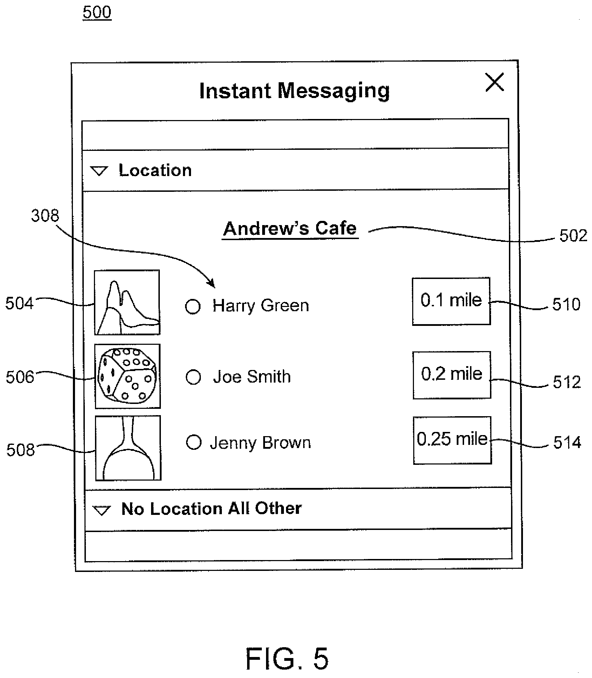

FIG. 5 illustrates a list **308** of instant messaging contacts **262**, within a display window **500**, ranked by order of proximity to a single set location **502**, in this example, 'Andrew's Eatery.' The instant messaging contact closest to the set location **502** is Harry Green **504** who is shown to be 0.1 miles away **510** from the set location **502.** The next closest contact is Joe Smith **506** who is shown to be 0.2 miles **512** distant from the set location **502.** The online or available instant messaging contact **508** who is farthest away from the set location **502** is Jenny Brown, who is 0.25 miles away from the set location **502.**

In at least one implementation of the technology a type of transportation available to instant messaging contacts may be selectable. The technology can calculate the travel times from the location of instant messaging contacts to one or more set locations **502** using a pairwise comparison as discussed above. The device **200** can display list **308** of available contacts by order of the amount of time it would take them to travel to a set location **502.** In a further implementation the technology can run a pairwise comparison calculating the shortest travel time for each contact to travel to a set location **502** comparing multiple means of travel. Thus, for example, the technology can indicate that it will take person 'A' five minutes to travel to the closest chain store in Bloomington, Illinois if she travels on foot, and that it will take person 'B' 15 minutes to get to the closest chain store in Houston, Texas if he travels by car.

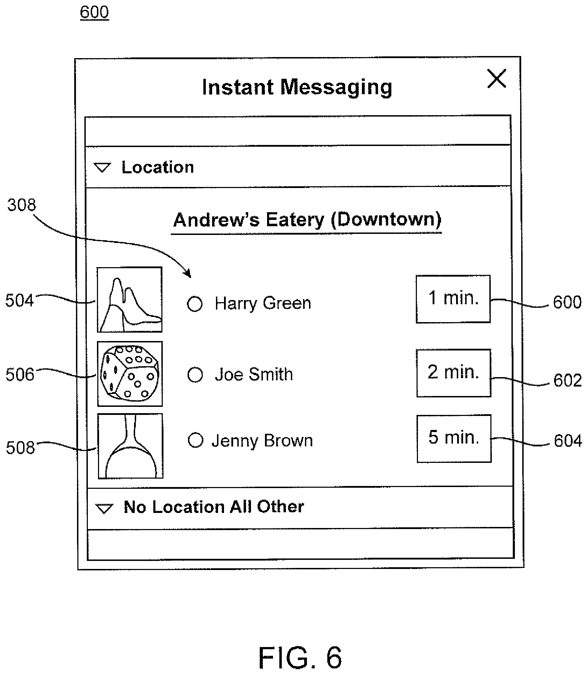

FIG. 6 illustrates a list **308** of instant messaging contacts, within an example display window **600**, ranked by order of proximity in terms of their travel time to a single set location **502.** The instant messaging contact closest to the set location **502** is Harry Green **504** who is shown to be one minute away **600** from the set location **502.** The next closest contact is Joe Smith **506** who is shown to be two minutes away from the set location **502.** The online or available instant messaging contact **508** who is farthest away from the set location **502** is Jenny Brown, who is five minutes away from the set location **502.**

In at least one implementation, (not shown) the set location, e.g. **502** can be the location of the device itself. Thus a device user may determine which of his instant messaging contacts is closest to him (or his device), as opposed to an external location.

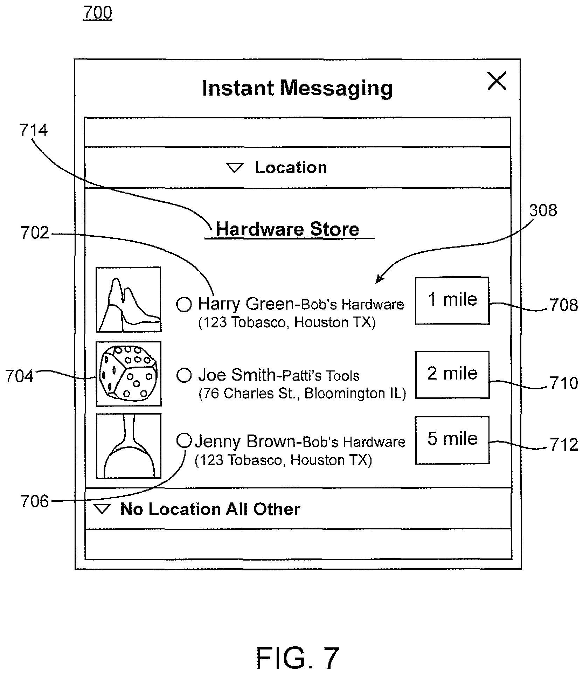

Figure 7 illustrates a display window **700** presenting a list **308** of instant messaging contacts by order of their proximity to a set location **714** which comprises multiple locations of a certain type, as discussed above. Contact Harry Green is shown to be one mile **708** from Bob's Hardware in Houston, Texas **702.** Contact Joe Smith is shown to be two miles **710** from a different hardware store, Patti's Tools in Bloomington, Illinois **704.** Contact Jenny Brown is shown to be five miles **712** Bob's Hardware in Houston.

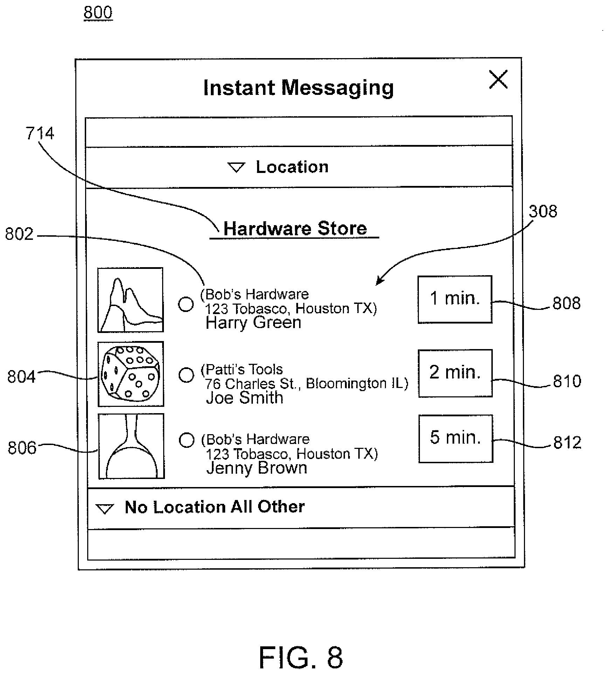

As discussed above, the technology can sort available contacts by their proximity in travel time to multiple locations of a certain type. Figure 8 illustrates a display window **800** of an electronic device **200** listing **308** contacts ranked by the contact's travel time to a generic location type **714.** The contact with the shortest time to a hardware store is Harry Green **802** who is one minute away **808** from a hardware store in Houston. The contact with the next closest time to a hardware store is Joe Smith **802** who is two minutes **812** away from a hardware store in Bloomington, Illinois. The contact who is farthest away from a hardware store is Jenny Brown **806** who is five minutes **812** travel time from the same hardware store that Harry Green is near, in Houston.

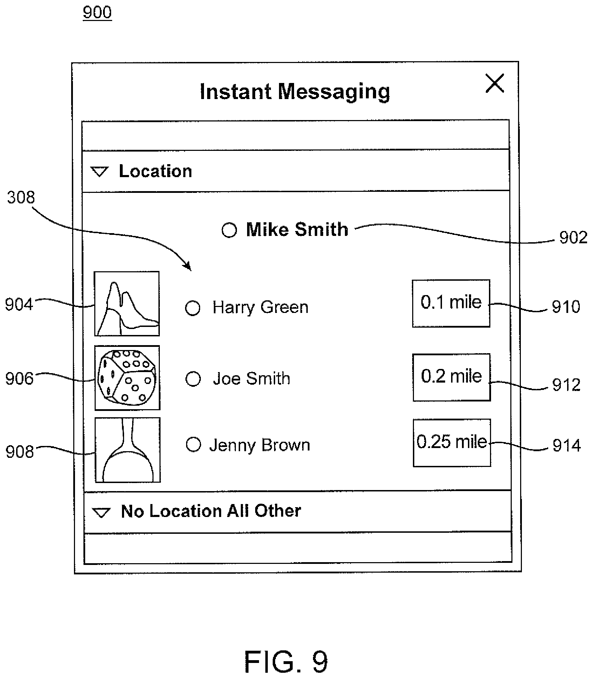

In at least one implementation, the set location, e.g. **902**, can be the location of another electronic device. Thus, a device may determine which of her instant messaging contacts is closest to a particular instant messaging contact. For example, FIG. 9 illustrates a list **308** of instant messaging contacts in a display window **900** of a device **200**, ranked by order of proximity to a single set location **902**, 'Mike Smith.' The instant messaging contact closest to Mike Smith **902** is Harry Green **904** who is shown to be 0.1 miles away 510 from Harry Smith. The next closest contact is Joe Smith **906** who is shown to be 0.2 miles **912** distant from Mike Smith (at the set location) **902.** The online or available instant messaging contact **908** who is farthest away from the location of Mike Smith **902** is Jenny Brown, who is 0.25 miles away from the set location **902.**

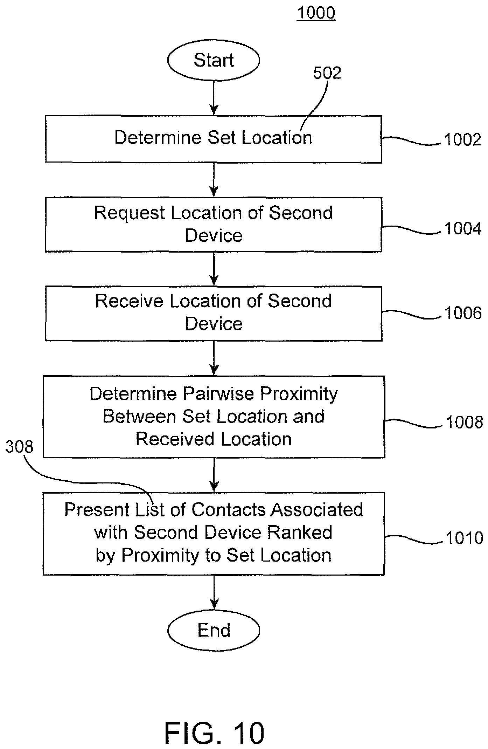

FIG. 10 illustrates the steps in a method for presenting instant messaging contacts of a first device. A set location **502** is determined **1002.** The location of at least one second device is requested **1004**, each second device associated with an instant messaging contact of the first device. The location of at least one second device is received **1006.** The pairwise proximity between each at least one received location and each at least one set location **502** is determined **1008.** A list **308** of at least one instant messaging contact in order of the determined pairwise proximity is presented **1010.**

The technology can take the forms of hardware, or both hardware and software elements. In some implementations, the technology is implemented in software, which includes but is not limited to firmware, resident software, microcode, a Field Programmable Gate Array (FPGA) or Application-Specific Integrated Circuit (ASIC), etc. In particular, for real-time or near real-time use, an FPGA or ASIC implementation is beneficial.

Furthermore, the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, removable memory connected via USB, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W), DVD, and Blu Ray™. The medium will be understood to not comprise a signal. Both processors and program code for implementing each as aspect of the technology can be centralized or distributed within one or more networks.

A data processing system suitable for storing a computer program product of the present technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem, WiFi, and Ethernet cards are just a few of the currently available types of network adapters. Such systems can be centralized or distributed, e.g., in peer-to-peer and client/server configurations. In some implementations, the data processing system is implemented using one or both of FPGAs and ASICs.

The foregoing examples and descriptions are merely exemplary and are not to be construed as limiting.

## Claims

1. A processor-implemented method for presenting instant messaging contacts of a first device, the method comprising:
determining two or more set locations (502);
requesting a location of at least one second device (103), each second device (103) associated with an instant messaging contact (262) of the first device (200);
receiving the location of the at least one second device (103);
determining a pairwise proximity between each at least one received location and each of the two or more set locations (502) by, for each at least one received location, determining the proximity between the received location and each of the two or more set locations (502) and presenting a list (308) of at least one instant messaging contact (262) in order of the determined pairwise proximity.

2. The method as recited in claim 1, wherein the pairwise proximity is based upon distance between the at least one set location (502) and the received location of the at least one second device (103).

3. The method as recited in claim 1, wherein the pairwise proximity is based upon estimated travel time between the at least one set location (502) and the received location of the at least one second device (103).

4. The method as recited in claim 1, wherein the pairwise proximity is based upon a determination of a mode of transportation available at the at least one second device (103) and estimated time to the at least one set location (502) using the mode of transportation available.

5. The method as recited in claim 4, wherein the mode of transportation is one of ambulatory, vehicular, and mass transit.

6. The method as recited in claim 1, the method further comprising:
requesting the location of at least one third device, each third device associated with an instant messaging contact (262) of the first device (200) ;
receiving the location of the at least one third device;
determining the pairwise proximity between the location of the at least one second device (103) and the location of the at least one third device by, for each at least one second device (103), determining the proximity between the received location of the at least one second device and each at least one third device; and
presenting a list (308) of at least one instant messaging contact (262) in order of the determined pairwise proximity between the location of the at least one second device (103) and the location of the at least one third device.

7. A computer program product for presenting instant messaging contacts of a first device, the computer program product comprising:
a least one computer readable medium; and
at least one program (258) module,
stored on the at least one medium, and
operative, upon execution by at least one processor (238) to:
determine two or more set locations (502);
request a location of at least one second device (103), each second device (103) associated with an instant messaging contact (262) of the first device (200);
receive the location of the at least one second device (103);
determine a pairwise proximity between each at least one
received location and each of the two or more set locations (502) by, for each at least one received location, determining the proximity between the received location and each of the two or more set locations (502) and
present a list (308) of at least one instant messaging contact (262) in order of the determined pairwise proximity.

8. The computer program product as recited in claim 7, wherein the pairwise proximity is based upon distance between the at least one set location (502) and the received location of the at least one second device (103).

9. The computer program product as recited in claim 7, wherein the pairwise proximity is based upon estimated travel time between the at least one set location (502) and the received location of the at least one second device (103).

10. The computer program product as recited in claim 7, wherein proximity is based upon a determination of a mode of transportation available at the at least one second device (103) and estimated time to the at least one set location (502) using the mode of transportation available.

11. The computer program product as recited in claim 10, wherein the mode of transportation is one of ambulatory, vehicular, and mass transit.

12. An electronic device, the electronic device comprising:
a display (222);
at least one processor (238) in communication with the display (222),
at least one computer readable medium in communication with the processor (238);
at least one program (258) module,
stored on the at least one medium, and operative upon execution by the processor (238) for:
determining two or more set locations (502);
requesting a location of at least one second device (103), each second device (103) associated with an instant messaging contact (262) of the first device (200);
receiving the location of the at least one second device (103);
determining a pair-wise proximity between each at least one received location and each of the two or more set locations (502) by, for each at least one received location, determining the proximity between the received location and each of the two or more set locations (502) and
presenting on the display (222) a list (308) of at least one instant messaging contact (262) in order of the determined pairwise proximity.

13. The electronic device as recited in claim 12, wherein proximity is based upon distance between the at least one set location (502) and the received location of the at least one second device (103).

14. The electronic device as recited in claim 12, wherein proximity is based upon estimated travel time between the at least one set location (502) and the received location of the at least one second device (103).

15. The electronic device as recited in claim 12, wherein proximity is based upon a determination of a mode of transportation available at the least one second device (103) and estimated time to the at least one set location (502) using the mode of transportation available.

## Patentansprüche

1. Prozessorimplementiertes Verfahren zur Darstellung von Instant-Messaging-Kontakten einer ersten Vorrichtung, wobei das Verfahren umfasst:
Bestimmen von zwei oder mehr Einstellungsorten (502);
Anfordern eines Orts von mindestens einer zweiten Vorrichtung (103), wobei jede zweite Vorrichtung (103) einem Instant-Messaging-Kontakt (262) der ersten Vorrichtung (200) zugeordnet ist;
Empfangen des Orts der mindestens einen zweiten Vorrichtung (103);
Bestimmen einer paarweisen Nähe zwischen jedem mindestens einem empfangenen Ort und jedem der zwei oder mehr Einstellungsorte (502) durch, für jeden mindestens einen empfangenen Ort, Bestimmen der Nähe zwischen dem empfangenen Ort und jedem der zwei oder mehr Einstellungsorte (502), und
Darstellen einer Liste (308) mindestens eines Instant-Messaging-Kontakts (262) in der Reihenfolge der bestimmten paarweisen Nähe.

2. Verfahren nach Anspruch 1, wobei die paarweise Nähe auf dem Abstand zwischen dem mindestens einen Einstellungsort (502) und dem empfangenen Ort der mindestens einen zweiten Vorrichtung (103) basiert.

3. Verfahren nach Anspruch 1, wobei die paarweise Nähe auf einer geschätzten Wegzeit zwischen dem mindestens einen Einstellungsort (502) und dem empfangenen Ort der mindestens einen zweiten Vorrichtung (103) basiert.

4. Verfahren nach Anspruch 1, wobei die paarweise Nähe auf einer Bestimmung einer Transportart, die bei der mindestens einen zweiten Vorrichtung (103) verfügbar ist, und einer geschätzten Zeit zu dem mindestens einen Einstellungsort (502) unter Verwendung der verfügbaren Transportart basiert.

5. Verfahren nach Anspruch 4, wobei die Transportart eines von Fußgang, Fahrzeug, und Massentransit ist.

6. Verfahren nach Anspruch 1, wobei das Verfahren ferner umfasst:
Anfordern des Orts mindestens einer dritten Vorrichtung, wobei jede dritte Vorrichtung einem Instant-Messaging-Kontakt (262) der ersten Vorrichtung (200) zugeordnet ist;
Empfangen des Orts der mindestens einen dritten Vorrichtung;
Bestimmen der paarweisen Nähe zwischen dem Ort der mindestens einen zweiten Vorrichtung (103) und dem Ort der mindestens einen dritten Vorrichtung durch, für jede mindestens eine zweite Vorrichtung (103), Bestimmen der Nähe zwischen dem empfangenen Ort der mindestens einen zweiten Vorrichtung und jeder mindestens einen dritten Vorrichtung; und
Darstellen einer Liste (308) mindestens eines Instant-Messaging-Kontakts (262) in der Reihenfolge der bestimmten paarweisen Nähe zwischen dem Ort der mindestens einen zweiten Vorrichtung (103) und dem Ort der mindestens einen dritten Vorrichtung.

7. Computerprogrammprodukt zur Darstellung von Instant-Messaging-Kontakten einer ersten Vorrichtung, wobei das Computerprogrammprodukt umfasst:
mindestens ein computerlesbares Medium; und
mindestens ein Programm- (258) Modul,
das auf dem mindestens einen Medium gespeichert ist, und
betreibbar ist, bei Ausführung durch mindestens einen Prozessor (238), zum:
Bestimmen von zwei oder mehr Einstellungsorten (502);
Anfordern eines Orts mindestens einer zweiten Vorrichtung (103), wobei jede zweite Vorrichtung (103) einem Instant-Messaging-Kontakt (262) der ersten Vorrichtung (200) zugeordnet ist;
Empfangen des Orts der mindestens einen zweiten Vorrichtung (103);
Bestimmen einer paarweisen Nähe zwischen jedem mindestens einen empfangenen Ort und jedem der zwei oder mehr Einstellungsorte (502) durch, für jeden mindestens einen empfangenen Ort, Bestimmen der Nähe zwischen dem empfangenen Ort und jedem der zwei oder mehr Einstellungsorte (502), und
Darstellen einer Liste (308) mindestens eines Instant-Messaging-Kontakts (262) in der Reihenfolge der bestimmten paarweisen Nähe.

8. Computerprogrammprodukt nach Anspruch 7, wobei die paarweise Nähe auf dem Abstand zwischen dem mindestens einen Einstellungsort (502) und dem empfangenen Ort der mindestens einen zweiten Vorrichtung (103) basiert.

9. Computerprogrammprodukt nach Anspruch 7, wobei die paarweise Nähe auf einer geschätzten Wegzeit zwischen dem mindestens einen Einstellungsort (502) und dem empfangenen Ort der mindestens einen zweiten Vorrichtung (103) basiert.

10. Computerprogrammprodukt nach Anspruch 7, wobei die Nähe auf einer Bestimmung einer Transportart, die bei der mindestens einen zweiten Vorrichtung (103) verfügbar ist, und einer geschätzten Zeit zu dem mindestens einen Einstellungsort (502) unter Verwendung der verfügbaren Transportart basiert.

11. Computerprogrammprodukt nach Anspruch 10, wobei die Transportart eines von Fußgang, Fahrzeug, und Massentransit ist.

12. Elektronische Vorrichtung, wobei die elektronische Vorrichtung umfasst:
eine Anzeige (222);
mindestens einen Prozessor (238) in Kommunikation mit der Anzeige (222),
mindestens ein computerlesbares Medium in Kommunikation mit dem Prozessor (238);
mindestens ein Programm- (258) Modul, das auf dem mindestens einen Medium gespeichert ist und bei Ausführung durch den Prozessor (238) betreibbar ist zum:
Bestimmen von zwei oder mehr Einstellungsorten (502);
Anfordern eines Orts mindestens einer zweiten Vorrichtung (103), wobei jede zweite Vorrichtung (103) einem Instant-Messaging-Kontakt (262) der ersten Vorrichtung (200) zugeordnet ist;
Empfangen des Orts der mindestens einen zweiten Vorrichtung (103);
Bestimmen einer paarweisen Nähe zwischen jedem mindestens einen empfangenen Ort und jedem der zwei oder mehr Einstellungsorte (502) durch, für jeden mindestens einen empfangenen Ort, Bestimmen der Nähe zwischen dem empfangenen Ort und jedem der zwei oder mehr Einstellungsorte (502), und
Darstellen auf der Anzeige (222) einer Liste (308) mindestens eines Instant-Messaging-Kontakts (262) in der Reihenfolge der bestimmten paarweisen Nähe.

13. Elektronische Vorrichtung nach Anspruch 12, wobei die Nähe auf einem Abstand zwischen dem mindestens einen Einstellungsort (502) und dem empfangenen Ort der mindestens einen zweiten Vorrichtung (103) basiert.

14. Elektronische Vorrichtung nach Anspruch 12, wobei die Nähe auf einer geschätzten Wegzeit zwischen dem mindestens einen Einstellungsort (502) und dem empfangenen Ort der mindestens einen zweiten Vorrichtung (103) basiert.

15. Elektronische Vorrichtung nach Anspruch 12, wobei die Nähe auf einer Bestimmung einer Transportart basiert, die bei der mindestens einen zweiten Vorrichtung (103) verfügbar ist, und einer geschätzten Zeit zu dem mindestens einen Einstellungsort (502) unter Verwendung der verfügbaren Transportart.

## Revendications

1. Procédé implémenté par un processeur pour présenter des contacts de messagerie instantanée d'un premier dispositif, le procédé comprenant les étapes consistant à :
déterminer deux ou plusieurs emplacements définis (502) ;
demander un emplacement d'au moins un deuxième dispositif (103), chaque deuxième dispositif (103) étant associé à un contact de messagerie instantanée (262) du premier dispositif (200) ;
recevoir l'emplacement du ou des deuxièmes dispositifs (103) ;
déterminer une proximité par paire entre l'emplacement reçu ou chacun des emplacements reçus et chacun des deux ou plusieurs emplacements définis (502) en effectuant, pour chaque emplacement reçu, les opérations suivantes : détermination de la proximité entre l'emplacement reçu et chacun des deux ou plusieurs emplacements définis (502) et présentation d'une liste (308) d'au moins un contact de messagerie instantanée (262) dans l'ordre de la proximité par paire déterminée.

2. Procédé selon la revendication 1, dans lequel la proximité par paires est basée sur la distance entre le ou les emplacements définis (502) et l'emplacement reçu du ou des deuxièmes dispositifs (103).

3. Procédé selon la revendication 1, dans lequel la proximité par paire est basée sur le temps de parcours estimé entre le ou les emplacements définis (502) et l'emplacement reçu du ou des deuxièmes dispositifs (103).

4. Procédé selon la revendication 1, dans lequel la proximité par paires est basée sur la détermination d'un mode de transport disponible sur le ou les deuxièmes dispositifs (103) et sur le temps estimé pour atteindre l'emplacement défini ou les emplacements définis (502) en utilisant le mode de transport disponible.

5. Procédé selon la revendication 4, dans lequel le mode de transport est un mode de transport ambulatoire et/ou par véhicule et/ou en masse.

6. Procédé selon la revendication 1, le procédé comprenant en outre les étapes consistant à :
demander l'emplacement d'au moins un troisième dispositif, chaque troisième dispositif étant associé à un contact de messagerie instantanée (262) du premier dispositif (200) ;
recevoir l'emplacement du ou des troisièmes dispositifs ;
déterminer la proximité par paire entre l'emplacement du ou des deuxièmes dispositifs (103) et l'emplacement du ou des troisièmes dispositifs à l'aide, pour chacun du ou des deuxièmes dispositifs (103), des opérations suivantes :
détermination de la proximité entre l'emplacement reçu du ou des deuxièmes dispositifs et chacun du ou des troisièmes dispositifs ; et
présentation d'une liste (308) d'au moins un contact de messagerie instantanée (262) dans l'ordre de la proximité par paires déterminée entre l'emplacement du ou des deuxièmes dispositifs (103) et l'emplacement du ou des troisièmes dispositifs.

7. Progiciel informatique pour présenter des contacts de messagerie instantanée d'un premier dispositif, le progiciel informatique comprenant :
au moins un support lisible par ordinateur ; et
au moins un module de programme (258), stocké sur le ou les supports, et opérationnel, lors de l'exécution par au moins un processeur (238), pour :
déterminer deux ou plusieurs emplacements définis (502) ;
demander un emplacement d'au moins un deuxième dispositif (103), chaque deuxième dispositif (103) étant associé à un contact de messagerie instantanée (262) du premier dispositif (200) ;
recevoir l'emplacement du ou des deuxièmes dispositifs (103) ;
déterminer une proximité par paire entre l'emplacement reçu ou chacun des emplacements reçus et chacun des deux ou plusieurs emplacements définis (502) en effectuant, pour chaque emplacement reçu, les opérations suivantes : détermination de la proximité entre l'emplacement reçu et chacun des deux ou plusieurs emplacements définis (502) et
présentation d'une liste (308) d'au moins un contact de messagerie instantanée (262) dans l'ordre de la proximité par paire déterminée.

8. Progiciel selon la revendication 7, dans lequel la proximité par paire est basée sur la distance entre le ou les emplacements définis (502) et l'emplacement reçu du ou des deuxièmes dispositifs (103).

9. Progiciel selon la revendication 7, dans lequel la proximité par paire est basée sur le temps de parcours estimé entre le ou les emplacements définis (502) et l'emplacement reçu du ou des deuxièmes dispositifs (103).

10. Progiciel selon la revendication 7, dans lequel la proximité est basée sur la détermination d'un mode de transport disponible sur le ou les deuxièmes dispositifs (103) et sur le temps estimé pour atteindre l'emplacement défini ou les emplacements définis (502) en utilisant le mode de transport disponible.

11. Progiciel selon la revendication 10, dans lequel le mode de transport est un mode de transport ambulatoire et/ou automobile et/ou de masse.

12. Dispositif électronique, le dispositif électronique comprenant : un dispositif d'affichage (222) ;
au moins un processeur (238) en communication avec le dispositif d'affichage (222),
au moins un support lisible par ordinateur en communication avec le processeur (238) ;
au moins un module de programme (258), stocké sur le ou les supports, et opérationnel, lors de l'exécution par le processeur (238), pour :
déterminer deux ou plusieurs emplacements définis (502) ;
demander un emplacement d'au moins un deuxième dispositif (103), chaque deuxième dispositif (103) étant associé à un contact de messagerie instantanée (262) du premier dispositif (200) ;
recevoir l'emplacement du ou des deuxièmes dispositifs (103) ;
déterminer une proximité par paire entre l'emplacement reçu ou chacun des emplacements reçus et chacun des deux ou plusieurs emplacements définis (502) en effectuant, pour chaque emplacement reçu, les opérations suivantes :
détermination de la proximité entre l'emplacement reçu et chacun des deux ou plusieurs emplacements définis (502) et
présentation, sur le dispositif d'affichage (222), d'une liste (308) d'au moins un contact de messagerie instantanée (262) dans l'ordre de la proximité par paire déterminée.

13. Dispositif électronique selon la revendication 12, dans lequel la proximité est basée sur la distance entre le ou les emplacements définis (502) et l'emplacement reçu du ou des deuxièmes dispositifs (103) .

14. Dispositif électronique selon la revendication 12, dans lequel la proximité est basée sur le temps de parcours estimé entre le ou les emplacements définis (502) et l'emplacement reçu du ou des deuxièmes dispositifs (103).

15. Dispositif électronique selon la revendication 12, dans lequel la proximité est basée sur la détermination d'un mode de transport disponible sur le ou les deuxièmes dispositifs (103) et sur le temps estimé pour atteindre l'emplacement défini ou les emplacements définis (502) en utilisant le mode de transport disponible.
